# EUROPEAN PATENT SPECIFICATION

(11) **EP 2 503 709 B1**
(45) Date of publication and mention of the grant of the patent: **11.09.2013**
(21) Application number: 11159557.5
(22) Date of filing: 24.03.2011
(51) Int. Cl.: H04B 7/155, H04W 56/00, H04W 4/06

(54) **Automated meter reading system and method with reading time setting, master, relay and slave radio devices therefor**
Anordnung und Verfahren zur Selbstablese eines Zählers mit Setzem der Lesezeit, Befehler-, Relais- und Dienerfunkgerät dafür
Système et méthode de lecture automatique de compteur avec fixation du temps de lecture, appareils radio maître, relais et esclave associés

(43) Date of publication of application: 26.09.2012
(73) Proprietor: Panasonic Corporation, Kadoma-shi Osaka 571-8501 (JP)
(72) Inventor: Yamashita, Masumi, Osaka 540-6207 (JP); Saitou, Jinichi, Osaka 540-6207 (JP); Horiike, Yoshio, Osaka 540-6207 (JP)
(74) Representative: Schwabe - Sandmair - Marx

(56) References cited:
- US-A1- 2005 132 115
- US-A1- 2009 146 838
- US-A1- 2010 188 254
- US-A1- 2011 026 425

## Description

### TECHNICAL FIELD

The present invention relates to an automated meter reading system, a relay radio device, a slave radio device, and an automated meter reading method that collect meter-reading data acquired from a meter such as a gas meter.

### BACKGROUND ART

An automatic gas meter reading system has been already commercialized as a system for collecting meter-reading data from a meter such as a gas meter by wireless communication. Examples of the commercialized automatic gas meter reading system are the following systems:
(1) a 1-to-1 communication system that collects meter-reading data by 1-to-1 communication between a slave radio device installed in a gas meter and a master radio device connected to a telephone line;
(2) a 1-to-N communication system where a master radio device that performs 1-to-N (N is an integer of 2 or more) communication with a plurality of slave radio devices and is installed on a power pole or the like collects meter-reading data from a plurality of gas meters; and
(3) a handy terminal communication system where a meter reader collects meter-reading data by communicating with a slave radio device installed in a gas meter using a handy terminal having a built-in radio device.

In the 1-to-1 communication system, of these automatic gas meter reading systems, the master radio device is installed at a position communicable with the slave radio device.

In the 1-to-N communication system, the master radio device.installed on the power pole or the like is positioned so that its communication range overlaps with the communication range of an adjacent master radio device. The master radio device, when it cannot communicate with a slave radio device in the communication range, communicates with this slave radio device via the adjacent master radio device.

In the handy terminal communication system, the meter reader carrying the handy terminal moves to a position allowing communication with the slave radio device.

A conventional automatic gas meter reading system is mainly represented by these three systems. A system that has a relay radio device between a slave radio device and a master radio device and collects meter-reading data has not been commercialized.

However, in response to requirement of easiness to install and system cost reduction, an automatic meter reading system employing a relay radio device has been studied.

For example, a technology is proposed where a relay radio device is used as a sub master device, receives meter-reading data of a plurality of managed slave radio devices in a lump in response to a request from a handy terminal (a master device), and transmits the meter-reading data to the handy terminal in a lump (for example, Unexamined Japanese Patent Publication No. 2008-61079).

In the conventional automatic gas meter reading systems, especially in the handy terminal communication system of (3), the meter reader approaches the slave radio device to be meter-read and then starts meter-reading. Therefore, when the number of slave radio devices increases, the time required for meter-reading becomes longer in proportion to the increase, disadvantageously.

In the technology of the above-mentioned patent literature, the relay radio device receives meter-reading data of a plurality of managed slave radio devices in a lump, and transmits the received meter-reading data to the master radio device in a lump. Also in this case, the meter reader approaches the relay radio device to be meter-read, up to a distance allowing communication, and then starts receiving work of the meter-reading data. Therefore, the time required for meter-reading is not sufficiently shortened, disadvantageously.

US-2010/188254 A relates to improving the reception of data in wireless communication environments. A method is provided for improving the reception of meter data in an AMR system. In particular, the method includes obtaining a sample of data indicative of channel quality for each transmission channel in the operational frequency band of the endpoint device. Then, the data is analyzed and a determination is made as to whether the reception of data by the collection system can be improved. If the reception of data by the collection system can be improved, a command is generated for reprogramming the endpoint device. In one embodiment, the command includes channel reprogramming data for reprogramming the endpoint device.

### SUMMARY OF THE INVENTION

The aforementioned object is solved by the subject-matter of the independent claims. The dependent claims are directed to advantageous embodiments.

### ADVANTAGES OF THE INVENTION

Advantageously, the time required for meter-reading is shortened in a handy terminal communication system where a meter reader collects meter-reading data by communicating with a slave radio device installed in a gas meter using a handy terminal having a built-in radio device.

Advantageously, it is provided an automated meter reading system including the following elements:
a slave radio device that radio-transmits meter-reading data of a meter;
a relay radio device that radio-communicates with the slave radio device; and
a master radio device that radio-communicates with the relay radio device.
The master radio device includes the following elements:
a time setting section for setting the time information used for acquiring meter-reading data from the slave radio device;
a meter-reading data acquiring section for commanding the relay radio device to acquire the meter-reading data; and
a transmitting/receiving section for transmitting a command for acquiring the time information and meter-reading data to the relay radio device.

The relay radio device includes the following elements:
a transmitting/receiving section for receiving the command for acquiring the time information and meter-reading data from the master radio device;
a meter-reading data acquiring section for requesting the meter-reading data from the slave radio device based on the time information; and
a storage section for storing the meter-reading data received from the slave radio device.

The slave radio device includes the following elements:
a meter-reading section for measuring the meter-reading data according to the request of the relay radio device; and
a transmitting/receiving section for transmitting the meter-reading data to the relay radio device.

The transmitting/receiving section of the relay radio device, according to the request of the master radio device, transmits the meter-reading data previously acquired from the slave radio device to the master radio device.

### BRIEF DESCRIPTION OF DRAWINGS

Fig. 1 is a diagram showing a schematic configuration of an automated meter reading system in accordance with an exemplary embodiment of the present invention.
Fig. 2 is a block diagram showing a configuration of a handy terminal in the automated meter reading system in accordance with the exemplary embodiment of the present invention.
Fig. 3 is a block diagram showing a configuration of a relay radio device in the automated meter reading system in accordance with the exemplary embodiment of the present invention.
Fig. 4 is a block diagram showing a configuration of a slave radio device in the automated meter reading system in accordance with the exemplary embodiment of the present invention.
Fig. 5 is a diagram showing operation of the automated meter reading system in accordance with the exemplary embodiment of the present invention.
Fig. 6 is a flow chart showing operation of the relay radio device in the automated meter reading system in accordance with the exemplary embodiment of the present invention.
Fig. 7 is a flow chart showing operation of the slave radio device in the automated meter reading system in accordance with the exemplary embodiment of the present invention.
Fig. 8 is a flow chart showing operation when the relay radio device cannot receive meter-reading data from the slave radio device in the automated meter reading system in accordance with the exemplary embodiment of the present invention.
Fig. 9 is a diagram showing operation when the meter-reading data from the slave radio device cannot be acquired even by an alternative route in the automated meter reading system in accordance with the exemplary embodiment of the present invention.

### DETAILED DESCRIPTION OF PREFERRED EMBODIMENTS

An exemplary embodiment of the present invention will be described hereinafter with reference to the accompanying drawings. The present invention is not limited to the exemplary embodiment.

### (EXEMPLARY EMBODIMENT)

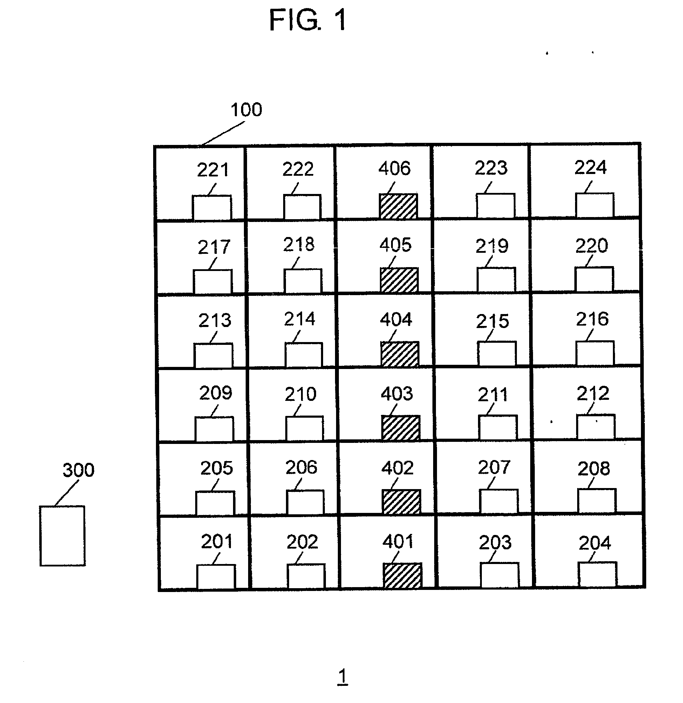

Fig. 1 is a diagram showing a schematic configuration of automated meter reading system 1 in accordance with an exemplary embodiment of the present invention.

Automated meter reading system 1 is an automatic gas meter reading system. Automated meter reading system 1 includes handy terminal 300 as a master radio device, a plurality of slave radio devices 201 through 224, and a plurality of relay radio devices 401 through 406.

Each of slave radio devices 201 through 224 is connected to a gas meter (not shown) installed in each room of collective housing 100 such as an apartment building, and acquires meter-reading data such as the amount of gas used.

Slave radio devices 201 through 224 convert the acquired meter-reading data into a radio signal, and transmit it to handy terminal 300 carried by a meter reader via relay radio devices 401 through 406 installed on respective floors.

The number and layout of handy terminal 300, slave radio devices 201 through 224, and relay radio devices 401 through 406 are not limited to the example of Fig. 1.

Next, the configuration of handy terminal 300 is described.

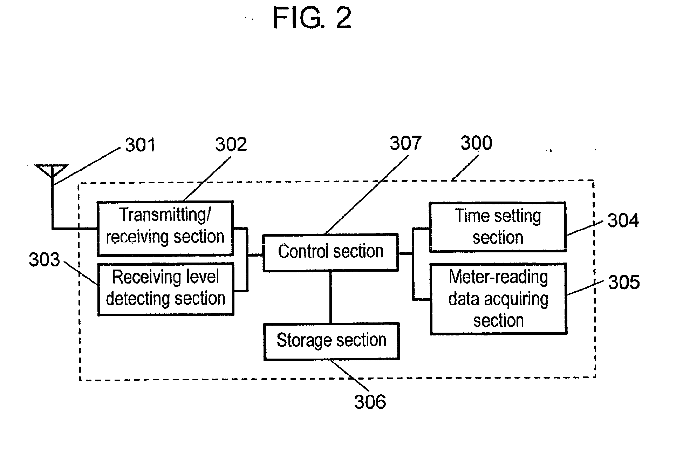

Fig. 2 is a block diagram showing the configuration of handy terminal 300 in automated meter reading system 1 in accordance with the exemplary embodiment of the present invention.

Handy terminal 300 includes antenna 301, transmitting/receiving section 302, receiving level detecting section 303, time setting section 304, meter-reading data acquiring section 305, storage section 306, and control section 307.

Receiving level detecting section 303 detects the receiving intensity of a signal received via antenna 301 and transmitting/receiving section 302.

Time setting section 304 allows a meter reader to set time information, and transmits it to relay radio devices 401 through 406 via antenna 301 and transmitting/receiving section 302. Here, the time information is set by the meter reader, and indicates timing of transmitting the meter-reading data from relay radio devices 401 through 406 to handy terminal 300. For example, as the time information, information for specifying a specific date such as "after one month" or the like and information for specifying a cycle can be set.

Meter-reading data acquiring section 305 commands relay radio devices 401 through 406 to acquire the meter-reading data via antenna 301 and transmitting/receiving section 302, and acquires the meter-reading data.

Storage section 306 stores the meter-reading data acquired by meter-reading data acquiring section 305. Storage section 306 stores information of relay radio devices 401 through 406 (for which time information is set) managed by handy terminal 300, and information of slave radio devices 201 through 224 to be managed by relay radio devices 401 through 406. The information stored in storage section 306 may include alternative route information (described later) and information of the relay radio device having succeeded in meter reading (described later). The stored information is written and read by control section 307.

Control section 307 controls operation of transmitting/receiving section 302, receiving level detecting section 303, time setting section 304, meter-reading data acquiring section 305, and storage section 306.

Next, the configuration of relay radio devices 401 through 406 is described.

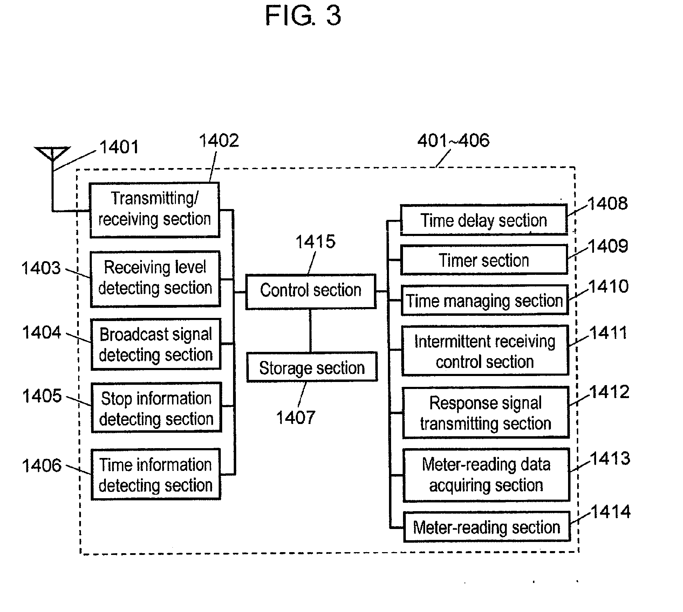

Fig. 3 is a block diagram showing the configuration of relay radio devices 401 through 406 in automated meter reading system 1 in accordance with the exemplary embodiment of the present invention.

Each of relay radio devices 401 through 406 includes antenna. 1401, transmitting/receiving section 1402, receiving level detecting section 1403, broadcast signal detecting section 1404, stop information detecting section 1405, time information detecting section 1406, storage section 1407, time delay section 1408, timer section 1409, time managing section 1410, intermittent receiving control section 1411, response signal transmitting section 1412, meter-reading data acquiring section 1413, meter-reading section 1414 and control section 1415.

As discussed later, each of relay radio devices 401 through 406, when the relay radio devices serve also as slave radio devices, is able to operate as slave radio device by using the functional blocks other than time information detecting section 1406, time managing section 1410 and meter-reading data acquiring section 1413.

Receiving level detecting section 1403 detects the receiving intensity of a signal received via antenna 1401 and transmitting/receiving section 1402.

Broadcast signal detecting section 1404 identifies whether or not the received signal is a broadcast signal, based on control information that is included in the signal received via antenna 1401 and transmitting/receiving section 1402.

Stop information detecting section 1405 identifies whether or not stop information is included in the signal received via antenna 1401 and transmitting/receiving section 1402, and detects it. The stop information is reported from the outside when timer section 1409 is stopped.

Time information detecting section 1406 identifies whether or not time information is included in the signal received via antenna 1401 and transmitting/receiving section 1402, and detects the time information when it is included.

Time delay section 1408 causes random time delay using a random number.

Timer section 1409 measures the period since response signal transmitting section 1412 radio-transmits a response signal in response to a broadcast signal that is received from other relay radio devices 402 through 406.

Time managing section 1410 measures the period since time information detecting section 1406 detects the time information until meter-reading operation is performed.

Intermittent receiving control section 1411 performs control required for intermittent (or random) transmission/reception by transmitting/receiving section 1402.

When broadcast signal detecting section 1404 identifies that the signal received via antenna 1401 and transmitting/receiving section 1402 is a broadcast signal, response signal transmitting section 1412 radio-transmits a response signal responding to the broadcast signal via antenna 1401 and transmitting/receiving section 1402.

When time managing section 1410 completes the measurement of a predetermined period until the meter-reading operation, meter-reading data acquiring section 1413 requests that slave radio devices 201 through 224 transmit meter-reading data via antenna 1401 and transmitting/receiving section 1402, and acquires the meter-reading data.

Storage section 1407 stores the meter-reading data acquired by meter-reading data acquiring section 1413 from slave radio devices 201 through 224. The stored meter-reading data is written and read by control section 1415.

Control section 1415 controls operation of transmitting/receiving section 1402, receiving level detecting section 1403, broadcast signal detecting section 1404, stop information detecting section 1405, time information detecting section 1406, storage section 1407, time delay section 1408, timer section 1409, time managing section 1410, intermittent receiving control section 1411, response signal transmitting section 1412, meter-reading data acquiring section 1413, and meter-reading section 1414.

Next, the configuration of slave radio devices 201 through 224 is described.

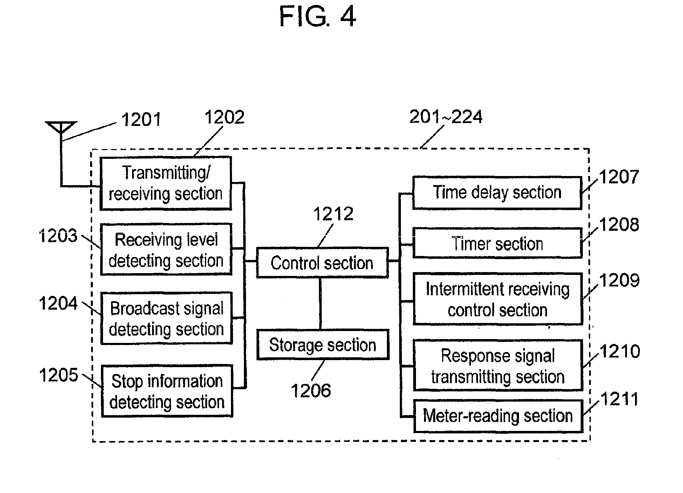

Fig. 4 is a block diagram showing the configuration of slave radio devices 201 through 224 in automated meter reading system 1 in accordance with the exemplary embodiment of the present invention.

Each of slave radio devices 201 through 224 includes antenna 1201, transmitting/receiving section 1202, receiving level detecting section 1203, broadcast signal detecting section 1204, stop information detecting section 1205, storage section 1206, time delay section 1207, timer section 1208, intermittent receiving control section 1209, response signal transmitting section 1210, meter-reading section 1211, and control section 1212.

First, meter-reading section 1211 measures meter-reading data such as the amount of gas used from the gas meter.

Receiving level detecting section 1203 detects the receiving intensity of a signal received via antenna 1201 and transmitting/receiving section 1202.

Broadcast signal detecting section 1204 identifies whether or not the received signal is a broadcast signal, based on control information that is included in the signal received via antenna 1201 and transmitting/receiving section 1202.

Stop information detecting section 1205 identifies whether or not stop information for stopping timer section 1208 is included in the signal received via antenna 1201 and transmitting/receiving section 1202. When stop information detecting section 1205 identifies the stop information, the operation of timer section 1208 is stopped, and response signal transmitting section 1210 immediately transmits a response signal in response to the reception of the broadcast signal. Thus, a state where no response signal is transmitted can be cancelled with any timing. Thus, a meter reader can communicate with a slave radio device with any timing.

Time delay section 1207 causes random time delay (transmission waiting time) using a random number.

Timer section 1208 measures the period since response signal transmitting section 1210 transmits a response signal in response to a broadcast signal that is received from relay radio devices 401 through 406.

Intermittent receiving control section 1209 performs control required for intermittent transmission/reception by transmitting/receiving section 1202.

When broadcast signal detecting section 1204 identifies that the signal received via antenna 1201 and transmitting/receiving section 1202 is a broadcast signal, response signal transmitting section 1210 radio-transmits a response signal responding to the broadcast signal via antenna 1201 and transmitting/receiving section 1202.

Storage section 1206 stores the meter-reading data including,the amount of gas used measured by meter-reading section 1211. When the meter-reading data is transmitted to handy terminal 300 or relay radio devices 401 through 406, the meter-reading data is read by control section 1212. The meter-reading data to be transmitted from slave radio devices 201 through 224 includes the amount of gas used. The meter-reading data may further include information of receiving intensity of radio wave received from relay radio devices 401 through 406 and remaining battery level or the like of slave radio devices 201 through 224. When the information of the receiving intensity is transmitted to relay radio devices 401 through 406, relay radio devices 401 through 406 can calculate the optimal time for communication with slave radio devices 201 through 224. When the information of the remaining battery level is transmitted to relay radio devices 401 through 406, the replacement time of the battery can be reported to handy terminal 300 via relay radio devices 401 through 406.

Control section 1212 controls operation of transmitting/receiving section 1202, receiving level detecting section 1203, broadcast signal detecting section 1204, stop information detecting section 1205, storage section 1206, time delay section 1207, timer section 1208, intermittent receiving control section 1209, response signal transmitting section 1210, and meter-reading section 1211.

Next, the operation of automated meter reading system 1 is described.

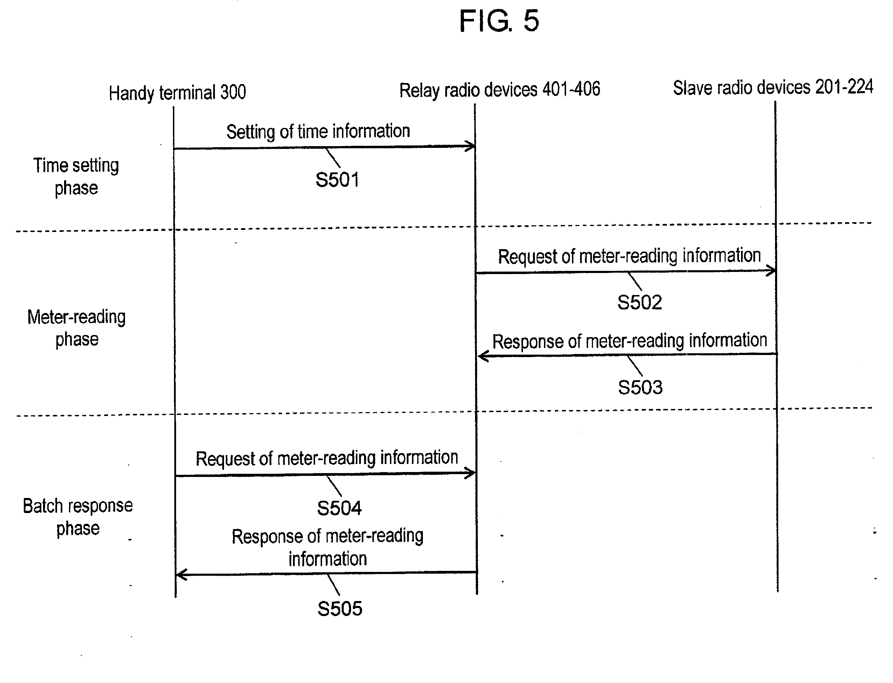

Fig. 5 is a diagram showing operation of automated meter reading system 1 in accordance with the exemplary embodiment of the present invention. Fig. 5 illustrates an example where handy terminal 300 collects meter-reading data from a plurality of gas meters installed in collective housing 100 using the operation of relay radio devices 401 through 406 and slave radio devices 201 through 224.

The whole operation of automated meter reading system 1 is mainly divided into three phases.

The first phase is a time setting phase. In the time setting phase, handy terminal 300 sets time information for relay radio devices 400 (S501). Specifically, a meter reader sets time information using time setting section 304 of handy terminal 300. Transmitting/receiving section 302 of handy terminal 300 transmits the set time information to relay radio devices 401 through 406. Relay radio devices 401 through 406 identify, with time information detecting section 1406, the time information received by transmitting/receiving section 1402, and store it in storage section 1407.

Next, the second phase is a meter-reading phase. In the meter-reading phase, relay radio devices 401 through 406 having received the time information request the meter-reading data from slave radio devices 201 through 224 by a time specified based on the time information, and perform meter-reading operation (S502). Time information may include finish time or start time for the meter-reading.

The meter-reading operation may be performed by individual communication, which is communication with each of slave radio devices 201 through 224, or by broadcast communication, which is simultaneous communication with all of slave radio devices 201 through 224. The broadcast communication allows meter-reading operation to be rapidly performed by the time that is specified based on the time information by handy terminal 300. Relay radio devices 401 through 406 hold the meter-reading data acquired from slave radio devices 201 through 224 using internal storage section 1407 (S503).

Next, the third phase is a batch response phase. In the batch response phase, handy terminal 300 radio-transmits, to relay radio devices 401 through 406, an acquiring request (batch response request message) of the meter-reading data stored in relay radio devices 401 through 406 (S504). Handy terminal 300 may transmit the acquiring request by individual communication to relay radio devices 401 through 406, or may transmit the acquiring request by broadcast communication.

In the batch response phase, in response to an input of a meter reader, control section 307 of handy terminal 300 transmits the batch response request message to relay radio devices 401 through 406 using meter-reading data acquiring section 305 and transmitting/receiving section 302, and receives the meter-reading data sent from relay radio devices 401 through 406 using transmitting/receiving section 302. Handy terminal 300 holds the received meter-reading data in storage section 306 via control section 307 (S505).

Next, the operation of relay radio devices 401 through 406 is described.

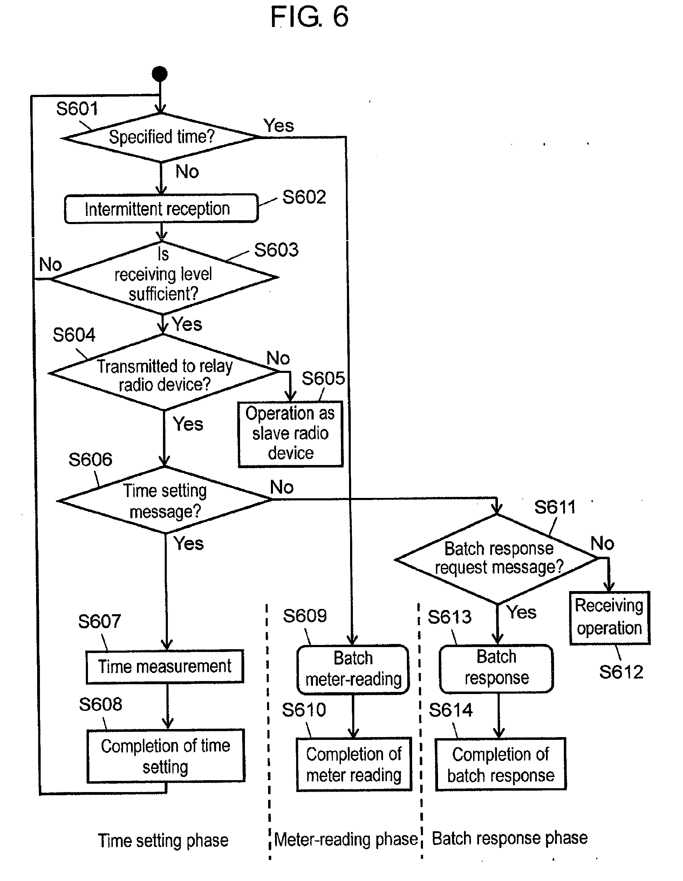

Fig. 6 is a flow chart showing operation of relay radio devices 401 through 406 in automated meter reading system 1 in accordance with the exemplary embodiment of the present invention.

First, the operation of relay radio devices 401 through 406 in the time setting phase is described.

When the time information has been already set by handy terminal 300, time managing section 1410 of relay radio devices 401 through 406 confirms whether or not it has reached the specified time (S601).

When it has not reached the specified time or the time information has not been set, intermittent receiving control section 1411 of relay radio devices 401 through 406 controls transmitting/receiving section 1402 and performs intermittent receiving operation (S602).

When a radio wave is received, receiving level detecting section 1403 detects the level of the radio wave acquired by the intermittent receiving operation (S603). When the receiving level is not sufficient, the process returns to step S601.

When the receiving level is determined to be sufficient in step S603, receiving level detecting section 1403 analyses the received radio wave, and determines whether the destination of the radio wave is relay radio devices 401 through 406 or slave radio devices 201 through 224 (S604). Receiving level detecting section 1403 confirms the destination of the received radio wave based on the unique contents or the like included in the message. For example, receiving level detecting section 1403 can determine that the destination of the radio wave is relay radio devices 401 through 406 when the last two digits of the destination ID are "TR". When the destination of the radio wave is neither relay radio devices 401 through 406 nor slave radio devices 201 through 224, receiving level detecting section 1403 determines that the received radio wave is noise.

When the destination of the radio wave is not relay radio devices 401 through 406 but slave radio devices 201 through 224 in step S604, relay radio devices 401 through 406 can operate as slave radio devices 201 through 224 until the subsequent communication finishes (S605). At this time, as discussed above, relay radio devices 401 through 406 serve also as slave radio devices 201 through 224.

When the destination of the radio wave is determined to be relay radio devices 401 through 406 in step S604, time information detecting section 1406 further analyses the message and determines whether or not the information in the radio wave is a time setting message (S606).

When the received radio wave includes the time setting message, time managing section 1410 measures time based on the time information acquired by time information detecting section 1406 (S607).

Thus, relay radio devices 401 through 406 where time information is set start to measure time with time managing section 1410, and come into a waiting state (S608).

Next, the operation of relay radio devices 401 through 406 in the meter-reading phase is described.

In step S601, time managing section 1410 starts to confirm whether or not it is a predetermined time by the time specified based on the time information. The predetermined time is required to be a time by the time specified by the time information, but relay radio devices 401 through 406 may determine the optimal time in response to the receiving level of the own radio wave or in response to the communication condition or the like detected based on the information transmitted from the slave radio devices. Thus, the reliability of the communication can be further improved.

When it becomes the predetermined time, time managing section 1410 stops the confirming operation of the specified time, and meter-reading data acquiring section 1413 starts the meter-reading operation. Specifically, meter-reading data acquiring section 1413 transmits a broadcast signal for starting batch meter-reading to slave radio devices 201 through 224 (S609). The operation of slave radio devices 201 through 224 in the meter-reading phase is described later. When the batch meter-reading operation finishes, relay radio devices 401 through 406 come into a waiting state (S610).

Next, the batch response phase is described. When time information detecting section 1406 confirms that the received radio wave is not a time setting message in step S606, the message is continuously analyzed and it is confirmed whether or not the radio wave is a batch response request message (S611).

When time information detecting section 1406 confirms that the radio wave is a batch response request message in step S611, response signal transmitting section 1412 batch-transmits the meter-reading data collected in the meter-reading phase to handy terminal 300 (S613). Then, after the transmission of the batch response message, relay radio devices 401 through 406 come into a waiting state (S614).

When time information detecting section 1406 confirms that the radio wave is not a batch response message in step S611, relay radio devices 401 through 406 continue the receiving operation as the other communication with relay radio devices 401 through 406 (S612).

Next, the operation of slave radio devices 201 through 224 in the meter-reading phase is described.

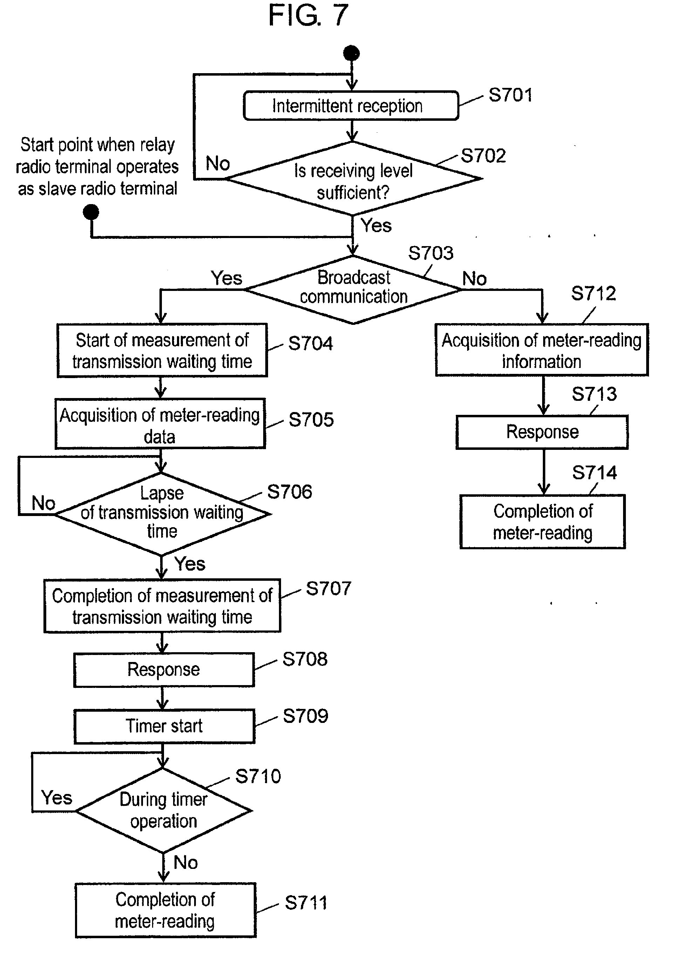

Fig. 7 is a flow chart showing operation of slave radio devices 201 through 224 in automated meter reading system 1 in accordance with the exemplary embodiment of the present invention.

Slave radio devices 201 through 224 perform intermittent reception with intermittent receiving control section 1209 (S701). Receiving level detecting section 1203 determines whether or not the level of the radio wave acquired during the intermittent reception is sufficient (S702).

When it is determined that the level of the radio wave is not sufficient in S702, the process returns to step S701. This is because the malfunction by noise and the low-reliability communication with other radio devices can be avoided, the reliability of the communication of the slave radio device itself and the other slave radio devices can be improved, and the current consumption can be reduced.

When the level of the radio wave is determined to be sufficient in S702, broadcast signal detecting section 1204 detects a broadcast signal that is transmitted from relay radio devices 401 through 406 and indicates execution of batch meter-reading (S703). Here, the broadcast signal can be detected when data for broadcast signals is previously set for the destination ID (for example, "FFFF" or the like is set for the destination ID).

When relay radio devices 401 through 406 operate as slave radio devices 201 through 224 as discussed above, the operation is started from step S703. This is because relay radio devices 401 through 406 has already detected input of a sufficient radio wave level.

When broadcast signal detecting section 1204 detects the broadcast signal in step S703, time delay section 1207 starts to measure the transmission waiting time (S704). The transmission waiting time is a time that is set at random for shifting the transmitting timing so as to prevent the following accident:

slave radio devices 201 through 224 having received the broadcast signal simultaneously respond to relay radio devices 401 through 406, thereby causing interference and hence reducing the communication success probability. Thus, the interference can be prevented, and the communication success probability can be improved.

As the transmission waiting time, a random time may be set as discussed above. Alternatively, slave radio devices 201 through 224, in performing intermittent reception in step S701, may select communication from other slave radio devices 201 through 224 or a time zone when peripheral noise by another apparatus is small. Relay radio devices 401 through 406, in performing intermittent reception in step S602, may select a time zone when peripheral noise by another apparatus is small and specify the transmission waiting time in slave radio devices 201 through 224. Such a configuration can further improve the communication success probability.

Slave radio devices 201 through 224, on receiving the broadcast signal in step S704, acquire meter-reading data from gas meters (not shown) connected to them (S705). A lapse of transmission waiting time, in which time delay section 1207 receives the broadcast signal and then starts measurement, is waited (S706).

After the lapse of the transmission waiting time, slave radio devices 201 through 224 stop the measurement of the transmission waiting time by time delay section 1207 (S707).

After the lapse of the transmission waiting time, response signal transmitting section 1210 transmits the meter-reading data, as a response, to relay radio devices 401 through 406 via transmitting/receiving section 1202 (S708). When stop information detecting section 1205 detects the stop information, response signal transmitting section 1412 immediately transmits the meter-reading data without waiting the lapse of the transmission waiting time.

After the response, slave radio devices 201 through 224 operate timer section 1208 for any time (for example, 20s) (S709). During the operation of timer section 1208, slave radio devices 201 through 224 do not send a response even when it receives a broadcast signal. After the completion of the operation of timer section 1208, the process comes into a waiting state (S711). The reason why any time is waited is that interference with the radio wave transmitted by other slave radio devices can be prevented and the reliability of communication with a slave radio device or other slave radio devices can be improved. The any time may differ on each of the slave radio devices 201 through 224.

When broadcast signal detecting section 1204 cannot detect a broadcast signal in step S703, broadcast signal detecting section 1204 determines that individual communication is performed where relay radio devices 401 through 406 individually request meter-reading data from slave radio devices 201 through 224, and meter-reading section 1211 acquires the meter-reading data from the connected gas meters (S712). After the meter-reading data is acquired, response signal transmitting section 1210 transmits the meter-reading data, as a response, to relay radio devices 401 through 406 (S713). After the response signal is transmitted, slave radio devices 201 through 224 complete the meter-reading operation (S714), and the process comes into a waiting state.

As discussed above, in automated meter reading system 1 of the present exemplary embodiment, the meter-reading data is held in relay radio devices 402 through 406 until the meter reader performs the next meter-reading. Thus, the meter reader can acquire the meter-reading data and shorten the meter-reading period by communicating with only the relay radio devices using handy terminal 300.

Next, cooperation between relay radio devices 401 through 406 when relay radio devices 401 through 406 cannot receive meter-reading data from slave radio devices 201 through 224 in the meter-reading phase is described.

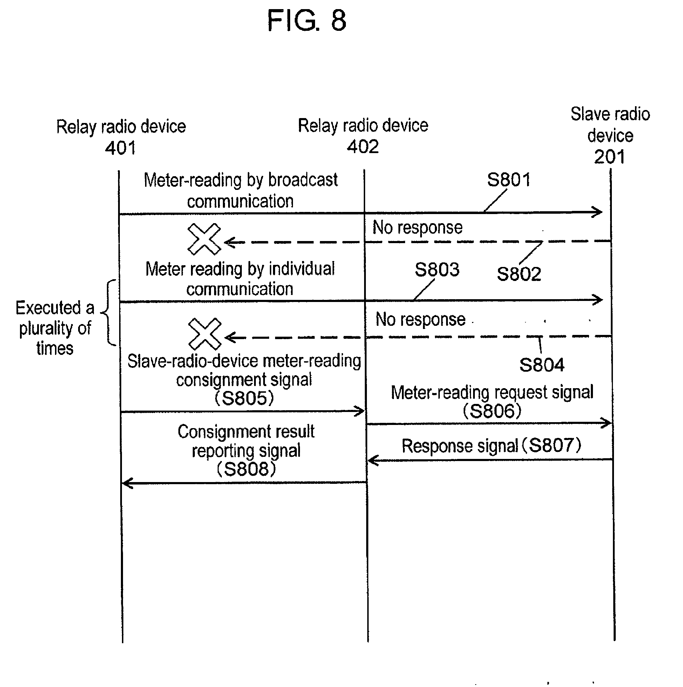

Fig. 8 is a flow chart showing operation when relay radio devices 401 through 406 cannot receive meter-reading data from slave radio devices 201 through 224 in automated meter reading system 1 in accordance with the exemplary embodiment of the present invention.

Fig. 8 illustrates the case where relay radio device 401 acquires meter-reading data from slave radio device 201.

Relay radio device 401 performs broadcast communication with slave radio device 201 based on the set time information (S801). When a response cannot be received (S802), relay radio device 401 further performs individual communication with slave radio device 201. When a response cannot be still received, relay radio device 401 performs retry operation (S803). Thanks to the individual communication, the meter reading of slave radio device 201 that has not been performed with a broadcast signal can be tried again, and the success probability of the meter reading can be improved.

When relay radio device 401 cannot receive a response from slave radio device 201 (S804), relay radio device 401 consigns the meter reading of slave radio device 201 to other relay radio device 402.

The consignment of the meter reading is specifically described. Meter-reading data acquiring section 1413 of relay radio device 401 reads alternative route information from the information stored in storage section 1407, and transmits a slave-radio-device meter-reading consignment signal to relay radio device 402 specified by the alternative route information (S805).

Relay radio device 402 performs the meter-reading operation by individual communication with slave radio device 201, based on the received slave-radio-device meter-reading consignment signal.

When the alternative route information of slave radio device 201 is not included in storage section 1407, meter-reading data acquiring section 1413 of relay radio device 401 sets information showing impossibility of communication of slave radio device 201 in the meter-reading data, and completes the meter-reading operation.

Meter-reading data acquiring section 1413 of relay radio device 402 having received the slave-radio-device meter-reading consignment signal transmits a meter-reading request signal to slave radio device 201 (S806). Response signal transmitting section 1210 of slave radio device 201 transmits a response signal including the meter-reading data to relay radio device 402 (S807). Transmitting/receiving section 1402 of relay radio device 402 receives the response signal.

Meter-reading data acquiring section 1413 of relay radio device 402, when it cannot receive a response signal even after a predetermined time since the transmission of the meter-reading request signal, sets information showing impossibility of communication as the meter-reading data of slave radio device 201. Meter-reading data acquiring section 1413 of relay radio device 402 transmits a consignment result reporting signal to relay radio device 401 (S808) in either of the following two cases:
meter-reading data acquiring section 1413 can receive a response signal within the predetermined time since the transmission of the meter-reading request signal; and
meter-reading data acquiring section 1413 cannot receive a response signal within the predetermined time.

Even when a response signal cannot be received, the transmission of the consignment result reporting signal to relay radio device 401 allows rapid and certain sending of a result when handy terminal 300 requests a meter-reading result from relay radio device 401.

Relay radio device 401 analyzes the consignment result reporting signal transmitted from relay radio device 402, and stores the meter-reading data (or information showing impossibility of communication) of slave radio device 201 in storage section 1407.

Processing when the meter-reading data of slave radio device 201 cannot be acquired even by the alternative route discussed in Fig. 8 is described.

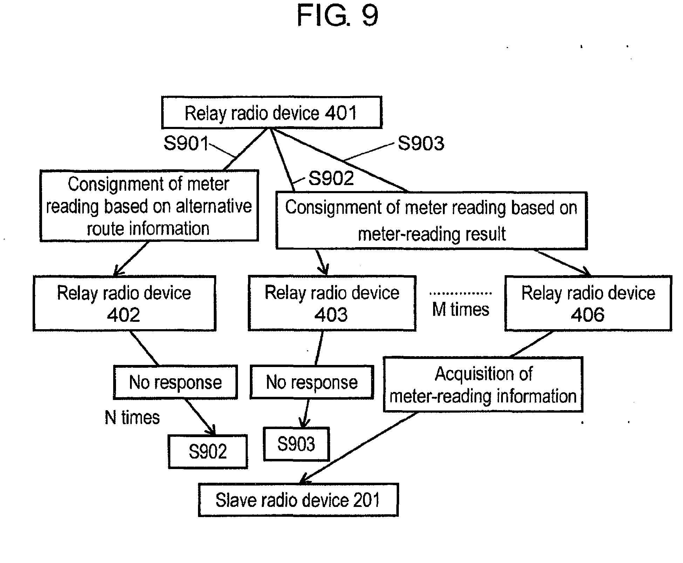

Fig. 9 is a diagram showing operation when the meter-reading data of slave radio device 201 cannot be acquired even by the alternative route in automated meter reading system 1 in accordance with the exemplary embodiment of the present invention.

First, relay radio device 401 consigns the meter reading of slave radio device 201 to relay radio device 402 (path of S901) based on the alternative route information, as discussed using Fig. 8. When the meter reading by the alternative route is failed due to external noise or variation in ambient environment, however, relay radio device 401 consigns the meter reading of slave radio device 201 to other relay radio device 403 based on the information of the relay radio device having succeeded in meter reading (path of S902). Here, this information is held in storage section 1407.

Specifically, meter-reading data acquiring section 1413 of relay radio device 401 transmits the slave-radio-device meter-reading consignment signal to relay radio device 403. When meter-reading data is included in a response signal from relay radio device 403, relay radio device 401 holds the meter-reading data in storage section 1407, and completes the meter-reading operation.

When the response signal from relay radio device 403 shows the impossibility of communication, similar processing is repeated for other relay radio devices 404 through 406 (path of S903). Specifically, meter-reading data acquiring section 1413 of relay radio device 401 transmits the slave-radio-device meter-reading consignment signal to all of relay radio devices 404 through 406 having succeeded in meter reading. Here, the information related to the success is stored in storage section 1407.

When meter-reading data acquiring section 1413 of relay radio device 401 transmits the slave-radio-device meter-reading consignment signal to all of relay radio devices 404 through 406 having succeeded in meter reading and cannot acquire the meter-reading data of slave radio device 201, the information showing impossibility of communication is stored in storage section 1407 and the meter-reading operation is completed.

Thus, in automated meter reading system 1, a communication failure that occurs between relay radio devices 402 to which the meter-reading is consigned and slave radio device 201 can be avoided, the meter-reading can be performed via other relay radio devices 403 through 406, and the success probability of meter reading can be improved.

In the path shown by each of steps S901 through S903 of Fig. 9, relay radio devices 401 through 406 may request meter-reading data a plurality of times when they cannot receive a response from slave radio device 201. In this case, preferably, relation of N>M is satisfied, where N is a repeat count of the path (path based on the alternative route information) shown in step S901, and M is a repeat count of steps S902 and S903 (path that is held in storage section 1407 and is based on the information of the relay radio device having succeeded in meter reading). This is because the path based on the alternative route information has higher reliability. Thus, needless repetition can be prevented and battery power consumption of relay radio devices 401 through 406 can be reduced. Further, interference to other system can also be reduced.

Each element of handy terminal 300, relay radio devices 401 through 406, and slave radio devices 201 through 224 may be formed of hardware. Alternatively, the element may be partially formed of a software program, and the software program may be executed by a computer.

Thus, the software and a hardware resource such as a computer can be made to cooperate. Recording the program in a recording 'medium or delivering it using communication lines can facilitate the delivery, update, installation of the program.

As discussed above, when an automated meter reading system, a relay radio device, a slave radio device, and an automated meter reading method of the present invention are used, the relay radio device previously performs meter reading of the slave radio device based on set time information. Therefore, even in a meter-reading place having a plurality of slave radio devices, extremely advantageously, the meter reading can be completed in a short time. The present invention is therefore useful as an automated meter reading system, a relay radio device, a slave radio device, and an automated meter reading method that collect meter-reading data acquired from a meter such as a gas meter.

## Claims

1. An automated meter reading system (1) comprising:
a slave radio device (201) for radio-transmitting meter-reading data of a meter;
a relay radio device (401) for radio-communicating with the slave radio device (201); and
a master radio device (300) for radio-communicating with the relay radio device (401),
**characterized in that**:
the master radio device (300) including:
a time setting section (304) for setting time information for acquiring meter-reading data from the slave radio device (201);
a meter-reading data acquiring section (305) for commanding the relay radio device (401) to acquire the meter-reading data; and
a transmitting/receiving section (302) for transmitting the time information and a command for acquiring the meter-reading data to the relay radio device (401),
the relay radio device (401) including:
a transmitting/receiving section (1402) for receiving the time information and the command for acquiring the meter-reading data from the master radio device (300);
a meter-reading data acquiring section (1413) for requesting the meter-reading data from the slave radio device (201) by a time specified by the time information; and
a storage section (1407) for storing the meter-reading data received from the slave radio device (201),
the slave radio device (201) including:
a meter-reading section (1211) for measuring the meter-reading data according to a request of the relay radio device (401); and
a transmitting/receiving section (1202) for transmitting the meter-reading data to the relay radio device (401), and
the transmitting/receiving section (1402) of the relay radio device (401), according to a request of the master radio device (300), transmits the meter-reading data previously acquired by the time specified by the time information from the slave radio device (201) to the master radio device (300).

2. The relay radio device (1401) used for the automated meter reading system of claim 1, wherein
the meter-reading data acquiring section (1413) acquires the meter-reading data from the slave radio device by a time specified by the time information, and transmits the meter-reading data to the master radio device (300).

3. The relay radio device of claim 2, wherein
the meter-reading data acquiring section (1413) transmits a broadcast signal for commanding the slave radio device (201) to collect the meter-reading data at a predetermined time based on the time information.

4. The relay radio device of claim 3, wherein
the meter-reading data acquiring section (1413) performs individual communication by using the transmitting/receiving section (1402) with the slave radio device (201) that has not sent a response to the broadcast signal.

5. The relay radio device of claim 4, wherein
the meter-reading data acquiring section (1413) consigns meter reading of the slave radio device to an other relay radio device (402) when the meter-reading data acquiring section (1413) cannot communicate with the slave radio device (201) even by the individual communication.

6. The relay radio device of claim 5, wherein
the storage section (1407) stores alternative route information about the slave radio device (201), and
the meter-reading data acquiring section (1413) selects the other relay radio device (402) from a plurality of relay radio devices (402 to 406) based on the alternative route information.

7. The relay radio device of claim 5 or 6, wherein
the transmitting/receiving section (1402) receives a meter-reading result from the other relay radio device (402) regardless of success or failure of reception of the meter-reading data from the slave radio device (201).

8. The relay radio device of claim 7, wherein
the meter-reading data acquiring section (1413) consigns the meter reading of the slave radio device to a still other relay radio device (403 to 406) when the meter-reading data acquiring section (1413) has received the meter-reading result from the other relay radio device (402) and the meter-reading result indicates non-acquisition of the meter-reading data of the slave radio device (201).

9. The relay radio device of claim 8, wherein
the storage section (1407) stores information about a relay radio device (403 to 406) having succeeded in communication, and
the meter-reading data acquiring section (1413) selects the still other relay radio device (403 to 406) based on the information.

10. The relay radio device of claim 9, wherein
when the meter-reading data acquiring section (1413) has consigned the meter reading to the other relay radio device (402) N times, the meter-reading data acquiring section (1413) consigns the meter reading to the still other relay radio device (403 to 406) M times, M being smaller than N.

11. The relay radio device of any one of claims 2 to 10, wherein
the meter-reading data includes information of receiving intensity of radio wave of the slave radio device (201) or information of remaining battery level included in the slave radio device (201).

12. The relay radio device of any one of claims 2 to 11, the relay radio device further comprising a receiving level detecting section (1403) for detecting receiving level and destination of a signal received by the transmitting/receiving section (1402),
wherein, when the receiving level of the signal exceeds a predetermined level and the destination is neither the relay radio device nor the slave radio device, the receiving level detecting section (1403) determines that the signal is noise, and
wherein the meter-reading data acquiring section (1413) commands the slave radio device (201) to transmit the meter-reading data in a time zone having small noise.

13. The relay radio device of any one of claims 2 to 12, the relay radio device further comprising a meter-reading section (1414) for acquiring the meter-reading data from the meter.

14. A slave radio device (201) used for the automated meter reading system of claim 1, the slave radio device (201) further comprising:
a response signal transmitting section (1210) for transmitting a response signal to the broadcast signal after a predetermined time when the transmitting/receiving section (1202) receives the broadcast signal, wherein the transmitting/receiving section (1202) receives the broadcast signal from the relay radio device (401); and
a timer section (1208) for starting operation when the response signal is transmitted, wherein, when the transmitting/receiving section (1202) receives the broadcast signal before the timer section runs out of time, the response signal transmitting section (1210) does not transmit the response signal.

15. The slave radio device of claim 14, further comprising a receiving level detecting section (1203) for detecting a receiving level of the broadcast signal,
wherein the response signal transmitting section (1210) does not transmit the response signal to the broadcast signal when the receiving level of the broadcast signal is lower than a predetermined level.

16. The slave radio device of claim 14 or 15, wherein
when timer section stop information is detected in a signal received by the transmitting/receiving section (1202), operation of the timer section (1208) is stopped and the response signal transmitting section (1210) transmits the response signal to the broadcast signal.

17. An automated meter reading method using an automated meter reading system (1), the automated meter reading system (1) including a slave radio device (201) for radio-transmitting meter-reading data of a meter, a relay radio device (401) for radio-communicating with the slave radio device (201),
and a master radio device (300) for radio-communicating with the relay radio device (401), the automated meter reading method comprising:
setting time information for acquiring meter-reading data from the slave radio device (201) in the master radio device (300);
commanding, by the master radio device (300), the relay radio device (401) to acquire the meter-reading data;
transmitting the time information and a command for acquiring the meter-reading data from the master radio device (300) to the relay radio device (401);
receiving, by the relay radio device (401), the time information and the command for acquiring the meter-reading data from the master radio device (300);
requesting, by relay radio device (401), the meter-reading data from the slave radio device (201) by a time specified by the time information;
storing the meter-reading data received from the slave radio device (201) by the relay radio device (401);
measuring, by slave radio device (201), the meter-reading data according to a request of the relay radio device (401);
transmitting the meter-reading data from the slave radio device (201) to the relay radio device (401); and
transmitting, by the relay radio device (401), the meter-reading data previously acquired by the time specified by the time information from the slave radio device (201) to the master radio device (300) according to a request of the master radio device (300).

18. A program for operating a computer mounted in a relay radio device (401) of an automated meter reading system (1), the automated meter reading system (1) including a slave radio device (201) for radio-transmitting meter-reading data of a meter, the relay radio device (401) for radio-communicating with the slave radio device (201), and the master radio device (300) for radio-communicating with the relay radio device (401), the program making the computer execute:
receiving time information and a command for acquiring meter-reading data from the master radio device (300);
requesting the meter-reading data from the slave radio device (201) by a time specified by the time information;
storing the meter-reading data received from the slave radio device (201); and
transmitting the meter-reading data previously acquired by the time specified by the time information from the slave radio device (201) to the master radio device (300) according to a request of master radio device (300).

## Patentansprüche

1. Automatisiertes Zählerablesesystem (1), enthaltend:
eine Slave-Funkvorrichtung (201) zur Funkübertragung von Zählerablesedaten eines Zählers;
eine Relais-Funkvorrichtung (401) zur Funkkommunikation mit der Slave-Funkvorrichtung (201); und
eine Master-Funkvorrichtung (300) zur Funkkommunikation mit der Relais-Funkvorrichtung (401),
**dadurch gekennzeichnet, dass**:
die Master-Funkvorrichtung (300) enthaltend:
einen Zeiteinstellabschnitt (304) zum Einstellen von Zeitinformationen zum Aufnehmen von Zählerablesedaten von der Salve-Funkvorrichtung (201);
einen Zählerablesedatenaufnahmeabschnitt (305) zur Ausgabe eines Befehls an die Relais-Funkvornchtung (401) zum Aufnehmen der Zählerablesedaten; und
einen Sende/Empfangsabschnitt (302) zum Senden der Zeitinformationen und eines Befehls zum Aufnehmen der Zählerablesedaten an die Relais-Funkvorrichtung (401),
wobei die Relais-Funkvorrichtung (401) enthält:
einen Sende/Empfangsabschnitt (1402) zum Empfangen der Zeitinformationen und des Befehls zum Aufnehmen der Zählerablesedaten von der Master-Funkvorrichtung (300);
einen Zählerablesedatenaufnahmeabschnitt (1413) zum Abfragen der Zählerablesedaten von der Slave-Funkvorrichtung (201) zu einem von den Zeitinformationen spezifizierten Zeitpunkt; und
einen Speicherabschnitt (1407) zum Speichern der von der Slave-Funkvorrichtung (201) empfangenen Zählerablesedaten,
wobei die Slave-Funkvorrichtung (201) enthält:
einen Zählerableseabschnitt (1211) zum Messen der Zählerablesedaten gemäß einer Abfrage von der Relais-Funkvorrichtung (401); und
einen Sende/Empfangsabschnitt (1202) zum Senden der Zählerablesedaten an die Relais-Funkvorrichtung (401), und
der Sende/Empfangsabschnitt (1402) der Relais-Funkvorrichtung (401) die Zählerablesedaten gemäß einer Abfrage der Master-Funkvorrichtung (300), die zuvor zu der von den Zeitinformationen spezifizierten Zeit von der Slave-Funkvorrichtung (201) erhalten wurde, an die Master-Funkvorrichtung (300) sendet.

2. Die für das automatisierte Zählerablesesystem gemäß Anspruch 1 verwendete Relais-Funkvorrichtung (1401), bei der
der Zählerablesedatenaufnahmeabschnitt (1413) die Zählerablesedaten von der Slave-Funkvorrichtung zu einem von den Zeitinformationen spezifizierten Zeitpunkt erhält und die Zählerablesedaten an die Master-Funkvorrichtung (300) sendet.

3. Relais-Funkvorrichtung (1401) gemäß Anspruch 2, bei der
der Zählerablesedatenaufnahmeabschnitt (1413) ein Übertragungssignal für einen Befehl an die Slave-Funkvorrichtung (201) zum Sammeln der Zählerablesedaten zu einem vorbestimmten Zeitpunkt basierend auf den Zeitinformationen sendet.

4. Relais-Funkvorrichtung (1401) gemäß Anspruch 3, bei der
der Zählerablesedatenaufnahmeabschnitt (1413) individuelle Kommunikation durchführt, indem er den Sende/Empfangsabschnitt (1402) zusammen mit derjenigen Slave-Funkvorrichtung (201) verwendet, die keine Antwort auf das Übertragungssignal gesendet hat.

5. Relais-Funkvorrichtung (1401) gemäß Anspruch 4, bei der
der Zählerablesedatenaufnahmeabschnitt (1413) eine Zählerablesung der Slave-Funkvorrichtung an eine andere Relais-Funkvorrichtung (402) sendet, wenn der Zählerablesedatenaufnahmeabschnitt (1413) nicht einmal mit individueller Kommunikation mit der Slave-Funkvorrichtung (201) kommunizieren kann.

6. Relais-Funkvorrichtung (1401) gemäß Anspruch 5, bei der
der Speicherabschnitt (1407) Alternativrouteninformationen über die Slave-Funkvorrichtung (201) speichert und
der Zählerablesedatenaufnahmeabschnitt (1413) die andere Relais-Funkvorrichtung (402) aus einer Mehrzahl von Relais-Funkvorrichtungen (402 bis 406) basierend auf den Alternativrouteninformationen auswählt.

7. Relais-Funkvorrichtung (1401) gemäß Anspruch 5 oder 6, bei der der Sende/Empfangsabschnitt (1402) ein Zählerableseergebnis von der anderen Relais-Funkvorrichtung (402) unabhängig von Erfolg oder Versagen eines Empfangs der Zählerablesedaten von der Slave-Funkvorrichtung (201) empfängt.

8. Relais-Funkvorrichtung (1401) gemäß Anspruch 7, bei der
der Zählerablesedatenaufnahmeabschnitt (1413) die Zählerablesung der Slave-Funkvorrichtung an eine ferner andere Relais-Funkvorrichtung (403 bis 406) sendet, wenn der Zählerablesedatenaufnahmeabschnitt (1413) das Zählerableseergebnis von der anderen Relais-Funkvorrichtung (402) empfangen hat und das Zählerableseergebnis eine Nichtaufnahme der Zählerablesedaten der Slave-Funkvorrichtung (201) anzeigt.

9. Relais-Funkvorrichtung (1401) gemäß Anspruch 8, bei der
der Speicherabschnitt (1407) Informationen über eine Relais-Funkvorrichtung (403 bis 406) speichert, die erfolgreich kommuniziert hat, und
der Zählerablesedatenaufnahmeabschnitt (1413) eine ferner andere Relais-Funkvorrichtung (403 bis 406) basierend auf den Informationen auswählt.

10. Relais-Funkvorrichtung (1401) gemäß Anspruch 9, bei der,
wenn der Zählerablesedatenaufnahmeabschnitt (1413) die Zählerablesung an die andere Relais-Funkvorrichtung (402) N-mal gesendet hat, der Zählerablesedatenaufnahmeabschnitt (1413) die Zählerablesung an die ferner andere Relais-Funkvorrichtung (403 bis 406) M-mal sendet, wobei M kleiner als N ist.

11. Relais-Funkvorrichtung (1401) gemäß irgendeinem der Ansprüche 2 bis 10, bei der
die Zählerablesedaten Informationen einer Empfangsintensität einer Funkwelle der Slave-Funkvorrichtung (201) oder Informationen einer verbleibenden Batteriestärke, die in der Slave-Funkvorrichtung (201) enthalten ist, enthält.

12. Relais-Funkvorrichtung (1401) gemäß irgendeinem der Ansprüche 2 bis 11, wobei die Relais-Funkvorrichtung ferner einen Empfangsniveaudetektionsabschnitt (1403) zum Detektieren eines Empfangsniveaus und des Ziels eines von dem Sende/Empfangsabschnitt (1402) empfangenen Signals enthält,
wobei, wenn das Empfangsniveau ein vorbestimmtes Niveau überschreitet und das Ziel weder die Relais-Funkvorrichtung noch die Slave-Funkvorrichtung ist, der Empfangsniveaudetektionsabschnitt (1403) bestimmt, dass das Signal Rauschen ist, und
wobei der Zählerablesedatenaufnahmeabschnitt (1413) der Slave-Funkvorrichtung (201) befiehlt, die Zählerablesedaten in einer Zeitzone zu senden, die geringes Rauschen aufweist.

13. Relais-Funkvorrichtung (1401) gemäß irgendeinem der Ansprüche 2 bis 12, wobei die Relais-Funkvorrichtung ferner einen Zählerableseabschnitt (1414) zum Aufnehmen der Zählerablesedaten von dem Zähler enthält.

14. Für das automatisierte Zählerablesesystem gemäß Anspruch 1 verwendete Slave-Funkvorrichtung (201), wobei die Slave-Funkvorrichtung ferner enthält:
einen Antwortsignalsendeabschnitt (1210) zum Senden eines Antwortsignals an das Übertragungssignal nach einer vorbestimmten Zeit, wenn der Sende/Empfangsabschnitt (1202) das Übertragungssignal empfängt, wobei der Sende/Empfangsabschnitt (1202) das Übertragungssignal von der Relais-Funkvorrichtung (401) empfängt; und
einen Zeitmessabschnitt (1208) zum Beginnen eines Vorgangs, wenn das Antwortsignal gesendet wird,
wobei, wenn der Sende/Empfangsabschnitt (1202) das Übertragungssignal empfängt, bevor dem Zeitmessabschnitt die Zeit abläuft, der Antwortsignalsendeabschnitt (1210) das Antwortsignal nicht sendet.

15. Slave-Funkvorrichtung gemäß Anspruch 14, ferner enthaltend einen Empfangsniveaudetektionsabschnitt (1203) zum Detektieren eines Empfangsniveaus des Übertragungssignals,
wobei der Antwortsignalsendeabschnitt (1210) das Antwortsignal nicht an das Übertragungssignal sendet, wenn das Empfangsniveau des Übertragungssignals geringer als ein vorbestimmtes Niveau ist.

16. Slave-Funkvorrichtung gemäß Anspruch 14 oder 15, bei der,
wenn Zeitmessabschnittstoppinformationen in einem von dem Sende/Empfangsabschnitt (1202) empfangenen Signal detektiert werden, der Betrieb des Zeitmessabschnitts (1208) angehalten wird und der Antwortsignalsendeabschnitt (1201) das Antwortsignal an das Übertragungssignal sendet.

17. Verfahren zum automatisierten Ablesen eine Zählers, das ein automatisiertes Zählerablesesystem (1) verwendet, wobei das automatisierte Zählerablesesystem (1) eine Slave-Funkvorrichtung (201) zur Funkübertragung von Zählerablesedaten eines Zählers, eines Relais-Funkvorrichtung (401) zur Funkkommunikation mit der Slave-Funkvorrichtung (201) und eine Master-Funkvorrichtung (300) zu Funkkommunikation mit der Relais-Funkvorrichtung (401) enthält, wobei das Verfahren zum automatisierten Ablesen eines Zählers enthält:
Einstellen von Zeitinformationen zum Aufnehmen von Zählerablesedaten von der Slave-Funkvorrichtung (201) in der Master-Funkvorrichtung (300);
es wird der Relais-Funkvorrichtung (401) von der Master-Funkvorrichtung (300) befohlen, die Zählerablesedaten aufzunehmen;
Senden der Zeitinformationen und eines Befehls zum Aufnehmen der Zählerablesedaten von der Master-Funkvorrichtung (300) an die Relais-Funkvorrichtung (401);
Empfangen der Zeitinformationen und des Befehls zum Aufnehmen der Zählerablesedaten von der Master-Funkvorrichtung (300) durch die Relais-Funkvorrichtung (401);
die Relais-Funkvorrichtung (401) fragt von der Slave-Funkvorrichtung (201) zu einem von den Zeitinformationen spezifizierten Zeitpunkt die Zählerablesedaten ab;
Speichern der von der Slave-Funkvorrichtung (201) empfangenen Zählerablesedaten durch die Relais-Funkvorrichtung (401);
Messen der Zählerablesedaten gemäß einer Anfrage von der Relais-Funkvorrichtung (401) durch die Slave-Funkvorrichtung (201);
Senden der Zählerablesedaten von der Slave-Funkvorrichtung (201) an die Relais-Funkvorrichtung (401); und
die Relais-Funkvorrichtung (401) sendet die zuvor zu dem von den Zeitinformationen spezifizierten Zeitpunkt aufgenommenen Zählerablesedaten an die Master-Funkvorrichtung (300) gemäß einer Anfrage von der Master-Funkvorrichtung (300).

18. Programm zum Betreiben eines in einer Relais-Funkvorrichtung (401) eines automatisierten Zählerablesesystems (1) angebrachten Computers, wobei das automatisierte Zählerablesesystem (1) eine Slave-Funkvorrichtung (201) zur Funkübertragung von Zählerablesedaten eines Zählers enthält, wobei die Relais-Funkvorrichtung (401) zur Funkkommunikation mit der Slave-Funkvorrichtung (201) ist und die Master-Funkvorrichtung (300) für Funkkommunikation mit der Relais-Funkvorrichtung (401) ist und das Programm den Computer dazu veranlasst, Folgendes auszuführen:
Empfangen von Zeitinformationen und eines Befehls zum Empfangen von Zählerablesedaten von der Master-Funkvorrichtung (300);
Abfragen der Zählerablesedaten von der Slave-Funkvorrichtung (201) zu einem von den Zeitinformationen spezifizierten Zeitpunkt;
Speichern der von der Slave-Funkvorrichtung (201) empfangenen Zählerablesedaten; und
Senden der zuvor zu dem von den Zeitinformationen spezifizierten Zeitpunkt aufgenommenen Zählerablesedaten von der Slave-Funkvorrichtung (201) an die Master-Funkvorrichtung (300) gemäß einer Anfrage von der Master-Funkvorrichtung (300).

## Revendications

1. Système de relevé de compteur automatique (1) comprenant :
un dispositif radio esclave (201) pour radiotransmettre des données de relevé de compteur d'un compteur ;
un dispositif radio relais (401) pour radiocommuniquer avec le dispositif radio esclave (201) ; et
un dispositif radio maître (300) pour radiocommuniquer avec le dispositif radio relais (401), **caractérisé en ce que**
le dispositif radio maître (300) comprend :
une section d'établissement de temps (304) pour établir des informations de temps pour l'acquisition de données de relevé de compteur en provenant du dispositif radio esclave (201) ;
une section d'acquisition de données de relevé de compteur (305) pour ordonner au dispositif radio relais (401) d'acquérir les données de relevé de compteur ; et
une section de transmission/réception (302) pour transmettre les informations de temps et un ordre d'acquisition des données de relevé de compteur au dispositif radio relais (401),
le dispositif radio relais (401) comprend :
une section de transmission/réception (1402) pour recevoir les informations de temps et l'ordre d'acquisition des données de relevé de compteur en provenance du dispositif radio maître (300) ;
une section d'acquisition de données de relevé de compteur (1413) pour demander les données de relevé de compteur en provenance du dispositif radio esclave (201) à une heure précisée par les informations de temps ; et
une section de stockage (1407) pour stocker les données de relevé de compteur reçues en provenance du dispositif radio esclave (201),
le dispositif radio esclave (201) comprend :
une section de relevé de compteur (1211) pour mesurer les données de relevé de compteur selon une demande du dispositif radio relais (401) ; et
une section de transmission/réception (1202) pour transmettre les données de relevé de compteur au dispositif radio relais (401), et
la section de transmission/réception (1402) du dispositif radio relais (401), selon une demande du dispositif radio maître (300), transmet les données de relevé de compteur précédemment acquises à l'heure précisée par les informations de temps en provenance du dispositif radio esclave (201) au dispositif radio maître (300).

2. Dispositif radio relais (1401) utilisé pour le système de relevé de compteur automatique de la revendication 1, dans lequel
la section d'acquisition de données de relevé de compteur (1413) acquiert les données de relevé de compteur en provenance du dispositif radio esclave à une heure précisée par les informations de temps, et transmet les données de relevé de compteur au dispositif radio maître (300).

3. Dispositif radio relais selon la revendication 2, dans lequel
la section d'acquisition de données de relevé de compteur (1413) transmet un signal de radiodiffusion pour ordonner au dispositif radio esclave (201) de collecter les données de relevé de compteur à une heure prédéterminée en se basant sur les informations de temps.

4. Dispositif radio relais selon la revendication 3, dans lequel
la section d'acquisition de données de relevé de compteur (1413) effectue une communication individuelle en utilisant la section de transmission/réception (1402) avec le dispositif radio esclave (201) qui n'a pas envoyé de réponse au signal de radiodiffusion.

5. Dispositif radio relais selon la revendication 4, dans lequel
la section d'acquisition de données de relevé de compteur (1413) envoie un relevé de compteur du dispositif radio esclave à un autre dispositif radio relais (402) lorsque la section d'acquisition de données de relevé de compteur (1413) ne peut pas communiquer avec le dispositif radio esclave (201) même par la communication individuelle.

6. Dispositif radio relais selon la revendication 5, dans lequel
la section de stockage (1407) stocke des informations d'itinéraire alternatif concernant le dispositif radio esclave (201), et
la section d'acquisition de données de relevé de compteur (1413) sélectionne l'autre dispositif radio relais (402) parmi une pluralité de dispositifs de radio relais (402 à 406) en se basant sur les informations d'itinéraire alternatif.

7. Dispositif radio relais selon la revendication 5 ou 6, dans lequel
la section de transmission/réception (1402) reçoit un résultat de relevé de compteur en provenance de l'autre dispositif radio relais (402) peu importe la réussite ou l'échec de réception de données de relevé de compteur en provenance du dispositif radio esclave (201).

8. Dispositif radio relais selon la revendication 7, dans lequel
la section d'acquisition de données de relevé de compteur (1413) envoie le relevé de compteur du dispositif radio esclave à encore un autre dispositif radio relais (403 à 406) lorsque la section d'acquisition de données de relevé de compteur (1413) a reçu le résultat de relevé de compteur en provenance de l'autre dispositif radio relais (402) et que le résultat de relevé de compteur indique une non-acquisition des données de relevé de compteur du dispositif radio esclave (201).

9. Dispositif radio relais selon la revendication 8, dans lequel
la section de stockage (1407) stocke des informations concernant un dispositif radio relais (403 à 406) dont la communication est réussie, et
la section d'acquisition de données de relevé de compteur (1413) sélectionne l'encore autre dispositif radio relais (403 à 406) en se basant sur les informations.

10. Dispositif radio relais selon la revendication 9, dans lequel
lorsque la section d'acquisition de données de relevé de compteur (1413) a envoyé le relevé de compteur à l'autre dispositif radio relais (402) N fois, la section d'acquisition de données de relevé de compteur (1413) envoi le relevé de compteur à l'encore autre dispositif radio relais (403 à 406) M fois, M étant plus petit que N.

11. Dispositif radio relais selon l'une quelconque des revendications 2 à 10, dans lequel
les données de relevé de compteur comprennent des informations d'intensité de réception d'onde radio du dispositif radio esclave (201) ou des informations de niveau de batterie restant comprises dans le dispositif radio esclave (201).

12. Dispositif radio relais selon l'une quelconque des revendications 2 à 11, le dispositif radio relais comprenant en outre une section de détection de niveau de réception (1403) pour détecter un niveau de réception et une destination d'un signal reçu par la section de transmission/réception (1402),
dans lequel, lorsque le niveau de réception du signal dépasse un niveau prédéterminé et que la destination n'est ni le dispositif radio relais ni le dispositif radio esclave, la section de détection de niveau de réception (1403) détermine que le signal est du bruit, et
dans lequel la section d'acquisition de données de relevé de compteur (1413) ordonne au dispositif radio esclave (201) de transmettre les données de relevé de compteur dans une zone de temps ayant un faible bruit.

13. Dispositif radio relais selon l'une quelconque des revendications 2 à 12, le dispositif radio relais comprenant en outre une section de relevé de compteur (1414) pour acquérir les données de relevé de compteur en provenance du compteur.

14. Dispositif radio esclave (201) utilisé pour le système de relevé de compteur automatique de la revendication 1, le dispositif radio esclave (201) comprenant en outre :
une section de transmission de signal de réponse (1210) pour transmettre un signal de réponse au signal de radiodiffusion après un temps prédéterminé lorsque la section de transmission/réception (1202) reçoit le signal de radiodiffusion, dans lequel la section de transmission/réception (1202) reçoit le signal de radiodiffusion en provenance du dispositif radio relais (401) ; et
une section de temporisateur (1208) pour démarrer le fonctionnement lorsque le signal de réponse est transmis,
dans lequel, lorsque la section de transmission/réception (1202) reçoit le signal de radiodiffusion avant que le temps de la section de temporisateur soit écoulé, la section de transmission de signal de réponse (1210) ne transmet pas le signal de réponse.

15. Dispositif radio esclave selon la revendication 14, comprenant en outre une section de détection de niveau de réception (1203) pour détecter un niveau de réception du signal de radiodiffusion,
dans lequel la section de transmission de signal de réponse (1210) ne transmet pas le signal de réponse au signal de radiodiffusion lorsque le niveau de réception du signal de radiodiffusion est inférieur à un niveau prédéterminé.

16. Dispositif radio esclave selon la revendication 14 ou 15, dans lequel lorsque des informations d'arrêt de section de temporisateur sont détectées dans un signal reçu par la section de transmission/réception (1202), le fonctionnement de la section de temporisateur (1208) est arrêté et la section de transmission de signal de réponse (1210) transmet le signal de réponse au signal de radiodiffusion.

17. Procédé de relevé de compteur automatique utilisant un système de relevé de compteur automatique (1), le système de relevé de compteur automatique (1) comprenant un dispositif radio esclave (201) pour radiotransmettre des données de relevé de compteur d'un compteur, un dispositif radio relais (401) pour radiocommuniquer avec le dispositif radio esclave (201),
et un dispositif radio maître (300) pour radiocommuniquer avec le dispositif radio relais (401), le procédé de relevé de compteur automatique comprenant :
l'établissement d'informations de temps pour acquérir des données de relevé de compteur en provenance du dispositif radio esclave (201) dans le dispositif radio maître (300) ;
l'ordre, par le dispositif radio maître (300), au dispositif radio relais (401) d'acquérir les données de relevé de compteur ;
la transmission des informations de temps et d'un ordre d'acquisition des données de relevé de compteur en provenance du dispositif radio maître (300) au dispositif radio relais (401) ;
la réception, par le dispositif radio relais (401), des informations de temps et de l'ordre d'acquisition des données de relevé de compteur en provenance du dispositif radio maître (300) ;
la demande, par le dispositif radio relais (401), des données de relevé de compteur en provenance du dispositif radio esclave (201) à une heure précisée par les informations de temps ;
le stockage des données de relevé de compteur reçues en provenance du dispositif radio esclave (201) par le dispositif radio relais (401) ;
la mesure, par le dispositif radio esclave (201) des données de relevé de compteur selon une demande du dispositif radio relais (401) ;
la transmission des données de relevé de compteur en provenance du dispositif radio esclave (201) au dispositif radio relais (401) ; et
la transmission, par le dispositif radio relais (401), des données de relevé de compteur précédemment acquises à l'heure précisée par les informations de temps en provenance du dispositif radio esclave (201) au dispositif radio maître (300) selon une demande du dispositif radio maître (300).

18. Programme d'exploitation d'un ordinateur installé dans un dispositif radio relais (401) d'un système de relevé de compteur automatique (1), le système de relevé de compteur automatique (1) comprenant un dispositif radio esclave (201) pour radiotransmettre des données de relevé de compteur d'un compteur, le dispositif radio relais (401) pour radiocommuniquer avec le dispositif radio esclave (201),
et le dispositif radio maître (300) pour radiocommuniquer avec le dispositif radio relais (401), le programme amenant l'ordinateur à exécuter :
la réception d'informations de temps et d'un ordre d'acquisition des données de relevé de compteur en provenance du dispositif radio maître (300) ;
la demande des données de relevé de compteur en provenance du dispositif radio esclave (201) à une heure précisée par les informations de temps ;
le stockage des données de relevé de compteur reçues en provenance du dispositif radio esclave (201) ; et
la transmission des données de relevé de compteur précédemment acquises à l'heure précisée par les informations de temps du dispositif radio esclave (201) au dispositif radio maître (300) selon une demande du dispositif radio maître (300).
